# EUROPEAN PATENT SPECIFICATION

(11) **EP 1 807 640 B1**
(45) Date of publication and mention of the grant of the patent: **05.03.2008**
(21) Application number: 04793677.8
(22) Date of filing: 27.10.2004
(51) Int. Cl.: F16H 61/00

(54) **CONTINUOUSLY VARIABLE TRANSMISSION PROVIDED WITH A CONTROL DEVICE**
MIT EINER STEUERVORRICHTUNG VERSEHENES STUFENLOSES GETRIEBE
TRANSMISSION A VARIATION CONTINUE EQUIPEE D'UN DISPOSITIF DE COMMANDE

(43) Date of publication of application: 18.07.2007
(73) Proprietor: ROBERT BOSCH GMBH, 70442 Stuttgart 30 (DE)
(72) Inventor: VAN DER SLUIS, Francis, Maria, Antonius, NL-5271 HP sint-Michielsgestel (NL)
(74) Representative: Plevier, Gabriel Anton Johan Maria
(86) International application number: PCT/NL2004/000753
(87) International publication number: WO 2006/046849

(56) References cited:
- DE-C1- 4 039 830
- US-B1- 6 290 620
- US-B1- 6 402 648

## Description

The present invention relates to a continuously variable transmission as defined in the preamble of the following claim 1.

Such a continuously variable transmission and the control device applied therein are known from the United States patent US 6,402,648 B1. The known continuously variable transmission includes a primary or drive pulley and a secondary or driven pulley, as well as an endless transmission element, which may be one of several known types, wrapped around and in frictional contact with the said pulleys. The transmission provides a transmission speed ratio between the drive and the driven pulleys that may be controlled to an arbitrary value within a range of transmission ratios covered by said transmission by an appropriate actuation thereof, which actuation is commonly effected by a control device of the transmission.

The known control device includes two pressure chambers; each associated with a respective pulley for effecting a respective clamping force on the endless transmission element. To this end, the control device includes a hydraulic pump and at least five hydraulic circuit parts wherein different pressure levels prevail. The pump supplies a flow of hydraulic fluid from a first circuit part or oil sump, wherein the lowest pressure level, normally the ambient pressure, prevails, to a second circuit part or main line, wherein the highest pressure level in the system prevails. The highest prevailing pressure, the so-called line pressure, is hereby set by means of a line pressure control valve, which valve discharges a surplus pump flow into a third circuit part or auxiliary line, where the prevailing pressure, the so-called auxiliary pressure, is set by means of a further pressure control valve. From the auxiliary line several auxiliary hydraulic users are supplied with fluid, such as a torque converter or lubrication points of the transmission. Further, fourth and fifth circuit parts are provided, respectively associated with the pressure chamber of the primary pulley and of the secondary pulley. Both said circuit parts are connectable to and can be supplied with pressurised fluid from the main line, via hydraulic valves, i.e. the primary valve and the secondary valve respectively. These latter valves are also used to respectively relieve the pressure in the primary pressure chamber, or primary pressure for short, and in the secondary pressure chamber, or secondary pressure for short, by selectively providing a hydraulic connection between such pressure chamber and the auxiliary line.

Although the above-described known control device should function satisfactorily per se and, in principle, is able to provide a relatively energy efficient actuation of the transmission, it also comes with the limitation that the primary pressure and the secondary pressure are at least equal to the auxiliary pressure, which normally is maintained at a level of at least 4 to 5 bar. The pulley will thus always exert an appreciable clamping force on the endless transmission element, even in conditions where such is not desirable for at least one pulley, e.g. when only a very small or no driving power at all is to be transmitted by the transmission (e.g. in vehicle coasting conditions), or when the transmission speed ratio is to be changed rapidly (e.g. in vehicle emergency stop conditions).

Departing from the known control device the present invention aims at further improving the functionality and efficiency thereof, while maintaining its favourable features in relation to the actuation of the continuously variable transmission.

According to the invention such aim may be achieved with the transmission construction according to the claim 1 attached hereto. More specifically, according to the invention the control device comprises valve means that, in order to re lieve the pressure in a at least one of the pressure chambers, can selectively connected that pressure chamber to either the auxiliary line -to conserve hydraulic power-, or to the oil sump -to enhance transmission functionality-. To this end, the control device may comprise a further valve that connects the respective pressure chamber to an intermediate hydraulic line of the valve means when relieving the pressure prevailing therein, whereby the valve means comprise a further valve, e.g. a switch valve, for selectively connecting such intermediate line to either the auxiliary line or to the oil sump.

The invention, in a further elaboration, also relates to an embodiment of the valve means wherein they are integrated with the further valve, which embodiment is specifically adapted to be applied in the control device according to the invention and that favourably obviates the use of the above-mentioned separate switch valve and intermediate hydraulic line. This further valve comprises four hydraulic connections, whereof one is linked to the main line, one to the respective pressure chamber, one to the auxiliary line and one to the oil sump, whereby the connection to the auxiliary line incorporates a simple one-way or check valve. With this design of the further valve a hydraulic connection is provided between the respective pressure chamber and either the auxiliary line alone, or both the auxiliary line and the oil sump, whereby the check valve closes off the auxiliary line when the chamber pressure drops below the auxiliary pressure. Hereby, a relatively compact valve design is provided that requires a less strict manufacturing tolerance and, during operation, provides a smooth pressure relieve, also at the instant where the hydraulic connection of the pressure chamber is switched from the auxiliary line to the oil sump.

The invention will now be elucidated further along a drawing in which:
figure 1 is a diagrammatic representation of a prior art and to be improved control device as a part of a schematically depicted continuously variable transmission that is to be actuated thereby;
figure 2 represents a first possible configuration of the novel transmission according to the invention;
figures 3, 4 and 5 each are a schematic cross section of an embodiment of the secondary valve that is particularly suited for application in the transmission according the invention;
figure 6 is a schematic cross section of a primary valve that is particularly suited for application in the transmission according the invention;
figure 7 represents a second possible configuration of the novel transmission according to the invention; and
figure 8 represents a third possible configuration of the novel transmission according to the invention.

In the figures, identical references relate to corresponding technical functions or structures, as the case may be. The thick lines indicate hydraulic lines, i.e. passages for hydraulic medium, whereas the dashed lines indicate pressure control lines for the control, i.e. the biasing of the various hydraulic valves.

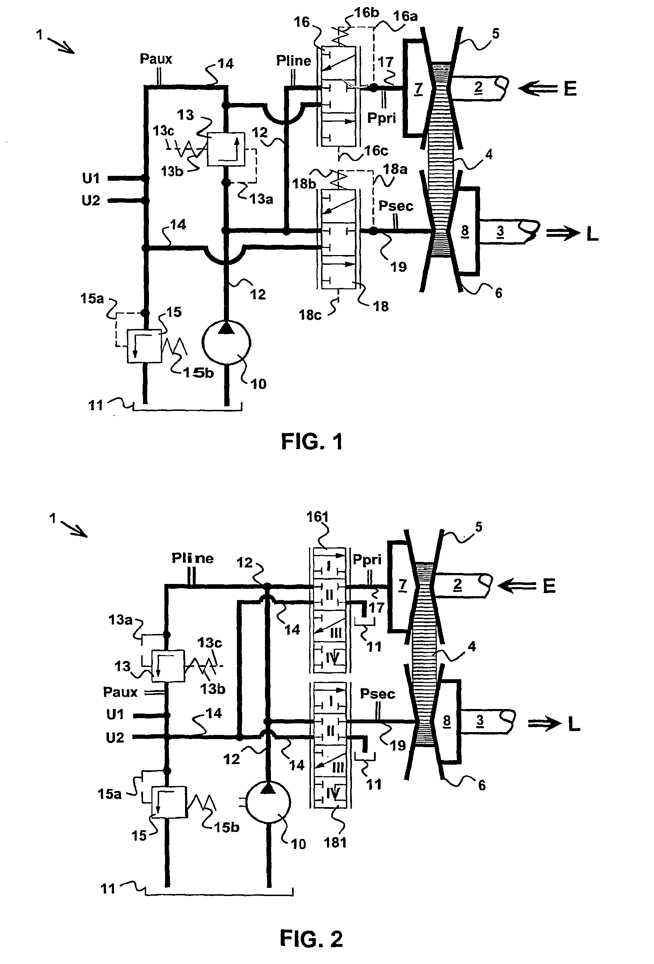

Figure 1 schematically shows a continuously variable transmission 1, for realising and changing a physical transmission ratio between an input or primary shaft 2 and an output or secondary shaft 3 of the transmission 1 comprising a control device for the actuation of the transmission 1, including any auxiliary functions thereof. Such auxiliary functions are represented by hydraulic users U1, U2, such as a clutch or a lubrication point of the transmission 1. The transmission 1 may be incorporated between an engine E and a load L, for example in a motor vehicle, for varying a speed and torque transmission ratio between the engine E and the load L within a continuous range of possible transmission ratios.

In this particular illustrative example the transmission 1 comprises an endless flexible belt 4 that is wrapped around and between a primary pulley 5 placed on the primary shaft 2 and secondary pulley 6 placed on the secondary shaft 3. The belt 4 is frictionally engaged with the pulley discs of the respective pulleys 5, 6 by means of clamping forces, respectively generated by a hydraulic pressure exerted in a primary pressure chamber 7 associated with an axially moveable disc of the primary pulley 2, i.e. the primary pressure Ppri, and by a hydraulic pressure exerted in a secondary pressure chamber 8 associated with an axially moveable disc of the secondary pulley 3, i.e. the secondary pressure Psec.

These pressures Ppri, Psec are set by the control device, which to this end comprises a pump 10 that normally is driven directly and continuously by the engine E and supplies a flow of pressurised hydraulic medium to a main line 12 of a hydraulic circuit, whereby such medium is drawn from a reservoir 11 for hydraulic medium, or oil sump 11. The pressure level in this main line 12, i.e. the line pressure Pline, is controlled by a line pressure valve 13, possibly to a fixed pressure level that is slightly higher than the highest level of the primary pressure Ppri and the secondary pressure Psec that is required during operation of the transmission 1, but usually to a level that is slightly (e.g. 0,5 to 2 bar) higher than the highest of the instantaneous primary and secondary pressure level Ppri, Psec. To this end, the line pressure valve 13 is provided with generally known valve biasing means 13a, 13b and 13c, being a pressure feedback line 13a, a spring 13b and a control line 13c. By means of an electronic control unit or ECU (not shown) and an associated solenoid valve (not shown) the pressure in the control line 13c is set, so that, in turn, a desired line pressure Pline is realised during operation of the transmission 1.

The line pressure valve 13 discharges a surplus of the pump flow into an auxiliary hydraulic line 14 from which the auxiliary hydraulic users U1, U2 of the transmission 1 are fed with hydraulic medium. The pressure level in this auxiliary line 14, i.e. the auxiliary pressure Paux, is controlled by an auxiliary pressure valve 15, usually to a fixed, relatively low pressure level of a few (e.g. 5) bar. To this e nd, the auxiliary pressure valve 15 is provided with a pressure feedback line 15a and a spring 15b. The auxiliary pressure valve 15 discharges a remaining surplus of the pump flow into the oil sump 11.

The primary pressure Ppri is controlled by means of a further, or primary pressure valve 16 via a first intermediate hydraulic line 17 connected to the primary pressure chamber 7. The primary pressure valve 16 further comprises hydraulic connections to the main line 12 and the auxiliary line 14 and is thus capable of selectively allowing the primary pressure chamber 7 to communicate with he main line 12 for increasing the primary pressure Ppri, or to the auxiliary line 14 for relieving the primary pressure Ppri. To this end, the primary pressure valve 1 6 is provided with a pressure feedback line 16a, a spring 16b and a control line 16c. By means of the ECU (not shown) and an associated solenoid valve (not shown) the pressure in the latter control line 16c is set, so that, in turn, a desired primary pressure Ppri may be realised reliably during operation of the transmission 1.

The secondary pressure Psec is controlled in an analogous manner by means of yet a further, or secondary pressure valve 18 via a second intermediate hydraulic line 19 connected to the secondary pressure chamber 8. The secondary pressure valve 18 further comprises hydraulic connections to the main line 12 and the auxiliary line 14 and is thus capable of selectively allowing the secondary pressure chamber 8 to communicate with he main line 12 for increasing the secondary pressure Psec, or to the auxiliary line 14 for relieving the secondary pressure Psec. To this end, the secondary pressure valve 18 is provided with a pressure feedback line 18a, a spring 18b and a control line 18c. By means of the ECU (not shown) and an associated solenoid valve (not shown) the pressure in the latter control line 18c is set, so that, in turn, a desired secondary pressure Psec may be realised reliably during operation of the transmission 1.

Accordingly with this known control device, both the minimum level of the primary pressure Ppri and of the secondary pressure Psec are limited to the auxiliary pressure level Paux. However, as mentioned in the above, during operation of the transmission 1 operational conditions can occur such wherein it would be favourable if the primary pressure Ppri, or the secondary pressure Psec could be relieved towards the oil sump 11.

In figure 2 a first possible configuration of the control device according to the present invention is illustrated, which maintains the favourable features of the known device and which at the same time provides the advantage that the pressure prevailing in the pressure chambers 7 and 8 can be selectively relieved either to the auxiliary line 14, or to the oil sump 11. The control device of fig ure 2 is of similar configuration and operation as that of figure 1, however, with the exception of the primary pressure valve 161 and the secondary pressure valve 181.

In accordance with the present invention, these latter valves 161, 181 can be set in four main positions I-IV. In a first position I of the valves 161, 181 the respective pressure chamber 7, 8 is allowed to communicate with he main line 12 for increasing the respective chamber pressure Ppri, Psec. In a second position II of the valves 161, 181 the respective pressure chamber 7, 8 is closed-off for essentially maintaining the respective chamber pressure Ppri, Psec. In a third position III of the valves 161, 181 the respective pressure chamber 7, 8 is allowed to communicate with the auxiliary line 14 for relieving the respective chamber pressure Ppri, Psec. In a fourth position IV of the valves 161, 181 the respective pressure chamber 7, 8 is allowed to communicate with the oil sump 11 for relieving the respective chamber pressure Ppri, Psec even further, possibly even to the ambient pressu re level. With this valve arrangement and the appropriate activation thereof by mean s of the ECU (not shown) and the associated solenoid valves (not shown) the general aim of the present invention may thus be achieved.

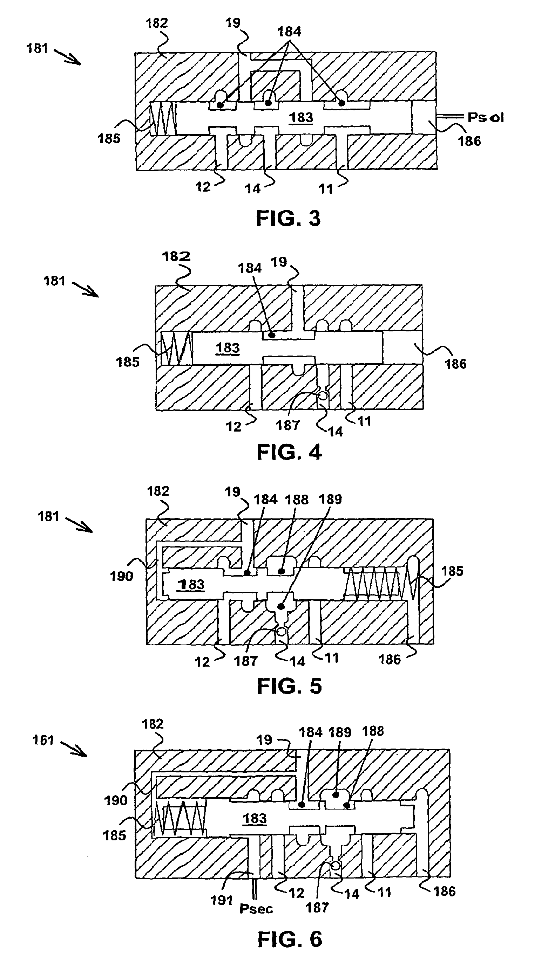

In the figure 3 a possible embodiment of the secondary valve 181 is illustrated in greater detail in a cross-section. The valve design shown in figure 3 may in principle be applied both as the primary valve 161 and as the secondary valve 181 in the hydraulic configuration of the control device according to figure 2, but is described hereunder with reference to the hydraulic connections of the secondary valve 181. The valve 181 comprises a housing 182 and a valve body 183 of predominantly cylindrical shape and provided axially moveable within the housing 182. The position of the valve body 183 in such axial direction is determined by valve biasing means 185, 186 in the form of a spring 185 that effects a first force on the valve body 1 83 urging it towards the right, which spring force is balanced by a second, variable force urging the valve body 183 towards the left, which second force is effected by a valve control pressure Psol in the control line 186 that is set by means of the ECU (not shown) and an associated solenoid valve (not shown).

The housing 182 provides one hydraulic connection to the main line 12, one to the respective pressure chamber 8 via the respective intermediate line 19, one to the auxiliary line 14 and one to the oil sump 11. The design of the valve body 183, in particular of recessed sections 184 thereof, is such that as the valve body 183 axially moves from its rightmost position in the valve housing 182 towards the right under the influence of an increasing valve control pressure Psol, it sequentially opens and closes the fluid communication between the respective intermediate line 19 and the main line 12, the auxiliary line 14 and the oil sump 11. This valve 181 is thus capable of allowing the respective pressure chamber 8 to communicate with he main line 12 for increasing the secondary pressure Psec, or selectively with the auxiliary line 14 or the oil sump 11 for relieving the secondary pressure Psec, as is required for the present invention.

However, when applying the above-described valve embodiment problems may be encountered in that it has a considerable (axial) dimension and that very narrow tolerances need to be applied at manufacture. These problems are mainly caused by the fact that, on the one hand, a leaking of hydraulic medium from the auxiliary line 14 to the oil sump 11 through the respective valve 181 obviously needs to be effectively prevented, whereas, on the other hand, a smooth transition needs to be realised between the above-mentioned third position III and the fourth position IV of the valve body 183, preferably without interrupting or the flow of hydraulic fluid from the respective pressure chamber 8. These functional requirements result in contradictory structural requirements on the valve design, which can at best only be approximated and, moreover, at considerable effort and expense in manufacturing.

The present invention, therefore, further relates to a valve embodiment that satisfies the above-mentioned functional requirements and, moreover, can be manufactured relatively easily. This valve embodiment is shown in the cross-section of figure 4. In this embodiment the valve body 183, in its right most position, opens the fluid communication between the respective intermediate line 19 and, sequentially, both the auxiliary line 14 and the oil sump 11, whereby a one-way, or check valve 187 is provided in the auxiliary line 14 to prevent leakage of hydraulic fluid from this line 14 into the oil sump 11. In this embodiment, it is thus advantageously not relied on the valve body 183 to close off the fluid communication between the auxiliary line 14 and the oil sump 11.

Although this latter valve embodiment of figure 4 is a considerable improvement over the valve embodi ment of figure 3, it also comes with the disadvantage that the axial movement of the valve body 183 between it leftmost and rightmost positions within the housing 182 is relatively large, because of the axial separation between the connection to the auxiliary line 14 and the oil sump 11, that are sequentially opened or closed by the axial movement of the valve body 183. This makes it difficult to rapidly change between pressure relieve to pressurisation of the respective primary or secondary pressure Ppri, Psec or vice versa.

The present invention, therefore, further relates to a valve embodiment wherein the axial movement of the valve body is favourably minimised, which valve embodiment is shown in the cross-section of figure 5. In this embodiment the valve body 183 is provided with a first and a second recess 184 and 188, whereas the housing 182 is provided with an internal recess 189 adjacent to its hydraulic connection to the auxiliary line 11 and facing the valve body 183. This valve design allows the valve body 183, as it moves towards the left, to open the fluid communication between the respective intermediate line 19 and the oil sump 11 immediately after the fluid communication to the auxiliary line 14 is opened. Hereby, the fluid flows from respective intermediate line 19, through all of the above-mentioned recesses 184, 188 and 189 into the oil sump 11, whereby, again the check-valve 187 prevents leakage of hydraulic fluid from this auxiliary line 14.

A further feature introduced in the valve embodiment of figure 5 is inclusion of a feedback of the respective primary or secondary pressure Ppri, Psec, via the internal line 190, in the valve biasing means 185, 186, 190. Such feature and its advantages are, however, commonly known and applied in the art. However, specifically in case of primary valve 161, the invention proposes to not only include pressure feedback of the primary pressure Ppri itself, but also from the secondary pressure Psec. That is to further extend the valve biasing means 185, 186, 190, 191 by a further internal line 191 for allowing the secondary pressure Psec to act on the valve body 183, as is indicated in the cross-section of figure 6. This valve embodiment is, according to the invention, particularly suited for application in the known control device, because apart from the above-explained features and advantages it also provides a favourable and automatic dependency of the primary pressu re Ppri on the secondary pressure Psec. Such dependency being favourable because when the secondary pressure Psec is raised or lowered, e.g. due to, respectively, an increased or a reduced engine torque, in an accurately controlled manner by the ECU based on the actually measured secondary pressure Psec, the primary pressure Ppri automatically follows such change. Thus, also the primary pressure Ppri may be accurately controlled by the ECU, however, favourably without having to actually measure the primary pressure Ppri.

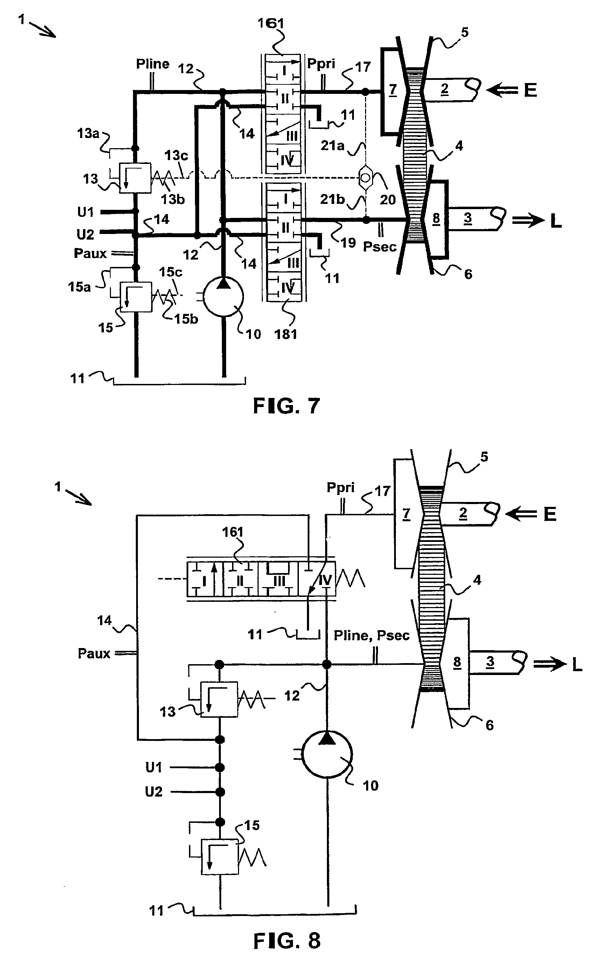

In figure 7 a second possible configuration of the control device according to the present invention is illustrated, which control device is of similar configuration and operation as that of figure 2, however, with the exception of the operation of the auxiliary pressure valve 15 and that of the line pressure valve 13, i.e. of the respective valve biasing means 13a, 13b, 13c, 15a, 15b and 15c thereof.

In relation to the operation of the auxiliary pressure valve 15 it is remarked that, according to the present invention, the efficiency of the transmission 1 may be enhanced even further when the control device is arranged such that the auxiliary pressure Paux is made variable, for example under the influence of a control pressure in a control line 15c of the auxiliary valve 15, as indicated in the figure 7.

This feature opens up the possibility to temporarily lower the auxiliary pressure Paux to below the above-mentioned normal level of 4- to 5 bar, so that hydraulic fluid from a pressure chamber 7, 8 may still be fed into the auxiliary line 14, even when the respective primary or secondary pressure Ppri, Psec is to be relieved to such lower level. According to the invention such lowering of the auxiliary pressure Paux is generally allowable without endangering the auxiliary functions thereof, because such low level of the primary or secondary pressure Ppri, Psec, i.e. lower than the normal level of the auxiliary pressure Paux, will typically occur when a very small or no driving power at all is to be transmitted by the transmission 1 (i.e. said vehicle coasting and/or emergency stop conditions). It being obvious that in such circumstance, the above-mentioned auxiliary users of the lubrication points and the clutch require less flow of hydraulic medium and/or at a lower pressure level for their proper operation.

The control pressure in the control line 15c of the auxiliary valve 15 may be specifically set for this purpose, e.g. by means of the ECU and an associated solenoid valves, or may be an appropriate pressure level prevailing in the control device, e.g. a further control pressure used to influence a clutch engagement pressure valve (not shown) for clutch engagement control.

Of course, this latter feature of the variable auxiliary pressure Paux may be favourably applied in the known transmission as such, i.e. apart from the above-described valve arrangement according to the invention. However, applying both features in the control device simultaneously will further enhance efficiency.

In relation to the operation of the line pressure valve 13 it is remarked that, according to the present invention, the control device may be simplified by allowing the highest of the primary pressure Ppri and the secondary pressure Psec to bias the line pressure valve 13 via its control line 13c. To this end, this control line 13c is hydraulically connected -lines 21 a and 21 b- to both the primary pressure chamber 7 and the secondary pressure chamber 8, whereby, however, a simple switch valve 20 is provided in such connection lines 21 a, 21 b for switching a fluid communication from one pressure chamber 7, 8 to the other in relation to where the highest pressure level Ppri, Psec prevails. Further, the valve biasing means 13a, 13b and 13c of the line pressure valve 13 are mutually adapted so that the line pressure Pline will be maintained at a level that is slightly (e.g. 0,5 to 2 ba r) higher than the highest of the instantaneous primary and secondary pressure level Ppri, Psec. Hereby, the above-mentioned control of the line pressure valve 13 by means of the ECU and the associated solenoid valve may be favourably omitted in a cost effective way.

Alternatively, it may be opted not to allow the highest of the actual primary pressure Ppri and the actual secondary pressure Psec to bias the line pressure valve 13 via its control line 13c as described above, but rather to use the -control- pressure in the control line 16c, 18c of the respective valve 16, 18 for this purpose (not shown), which control pressure is representative of the desired pressure level. This favourably provides for a faster and more accurate operation and response of the control device in relation to a change in transmission conditions, because a change in the said control pressure precedes and is predictive of a corresponding change in the respective primary or secondary pressure Ppri, Psec, which, moreover, tends to fluctuate also, i.e. undesirably, in dependence on external transmission conditions.

Of course, this latter feature of the operation or, more in particular, the biasing of the line pressure valve 13 may be favourably applied in the known transmission as such, i.e. apart from the above-described valve arrangement and/or variable auxiliary pressure Paux feature according to the invention. However, applying all of these features in the control device simultaneously will provide optimal results.

In figure 8 a third possible configuration of the control device according to the present invention is illustrated, which control device is of a different hydraulic configuration and operation as that of figures 1, 2 and 7, which illustrates that the application of the present invention is not limited to the particular hydraulic layout of the control device described herein-above. In the control device shown in figure 8, which is well known per se, the secondary pressure Psec is directly controlled by means of the line pressure valve 13. In this configuration, the secondary pressure Psec is identical to the line pressure Pline and the further, i.e. additional, secondary pressure valve 181 is thus not required.

In this configuration, in accordance with the present invention, in the primary pressure valve 161 is arranged such that is capable of relieving the primary pressure Ppri by allowing the primary pressure chamber 7 to communicate selectively with the auxiliary line 14 or with the oil sump 11. With this arrangement of the primary pressure valve 161 and the appropriate activation thereof by means of the ECU (not shown) and the associated solenoid valves (not shown) the general aim of the present invention may thus be achieved.

## Claims

1. Continuously variable transmission (1) with a control device comprising a pump (10) for supplying a flow of pressurised hydraulic medium to a main line (12) of the device, whereby such medium is drawn from an oil sump (11), a line pressure valve (13) for controlling the pressure level (Pline) in the main line (12), which latter valve (13) discharges a surplus of the pump flow into an auxiliary hydraulic line (14) of the device, an auxiliary pressure valve (15) for controlling the pressure level (Paux) in the auxiliary line (14) and a pressure chamber (7, 8) that is accociated with an axially moveable disc of a pulley (5, 6) of the continuously variable transmission (1), **characterised in that**, the device is further provided with valve means (161, 181) for selectively providing a hydraulic connection between the pressure chamber (7; 8) and the oil sump (11) or between the pressure chamber (7; 8) and the auxiliary line (14).

2. Continuously variable transmission (1) according to claim 1, **characterised in that** the valve means (161, 181) are integrated in a further valve (161, 181) for controlling the pressure level (Ppri, Psec) in the pressure chamber (7).

3. Continuously variable transmission (1) according to claim 2, **characterised in that** the further valve (161, 181) comprises four hydraulic connections, whereof one is linked to the main line (12), one to the pressure chamber (7, 8), one to the auxiliary line (14) and one to the oil sump (11) and whereby the further valve (161, 181) is capable of selectively opening a hydraulic connection of the pressure chamber (7; 8) either to the main line (12), to the auxiliary line (14), or to the oil sump (11).

4. Continuously variable transmission (1) according to claim 2, **characterised in that** the further valve (161, 181) comprises four hydraulic connections, whereof one is linked to the main line (12), one to the pressure chamber (7, 8), one to the auxiliary line (14) and one to the oil sump (11), whereby the connection to the auxiliary line (14) incorporates a check valve (187) and whereby the further valve (161, 181) is capable of selectively opening a hydraulic connection of the pressure chamber (7; 8) either to the main line (12), to the auxiliary line (14), or to both the auxiliary line (14) and the oil sump (11).

5. Continuously variable transmission (1) according to claim 4, **characterised in that** the further valve (161, 181) comprises a housing (182), wherein the said hydraulic connections are provided, and a valve body (183) provided axially moveable within the housing (182), whereby the valve body (183) is provided with first and second recesses (184, 188) and whereby the housing (182) is provided with an internal recess (189) adjacent to the hydraulic connection to the auxiliary line (11) and facing the valve body (183).

6. Continuously variable transmission (1) according to any one of the claims 2 to 5, **characterised in that** the further valve (161, 181) comprises a valve body (183) provided axially moveable within a respective housing (182) and an internal line (190) allowing hydraulic fluid pressurised at the pressure level (Ppri, Psec) of the respective pressure chamber (7, 8) associated with the further valve (161, 181) to act on the said valve body (183).

7. Continuously variable transmission (1) according to claim 6, **characterised in that** the further valve (161, 181) is provided with a further internal line (191) allowing hydraulic fluid pressurised at the pressure level (Ppri, Psec) of the respective other pressure chamber (7, 8) not associated with the further valve (161, 181) to act on the said valve body (183).

8. Continuously variable transmission (1) according to any one of the preceding claims, **characterised in that** the respective pressure chamber (7, 8) is associated with an axially moveable disc of a primary pulley (2) of the transmission (1) that is to be driven by the engine (E) of a motor vehicle.

9. Continuously variable transmission (1) according to any one of the preceding claims, **characterised in that** the auxiliary pressure (Paux) is variable.

10. Continuously variable transmission (1) according to claim 9, **characterised in that** the auxiliary pressure valve (15) is provided with valve biasing means (15a, 15b, 15c) including a control line (15c) carrying fluid pressurised at a pressure level prevailing elsewhere in the control device.

## Patentansprüche

1. Stufenloses Getriebe (1) mit einer Steuervorrichtung, umfassend: eine Pumpe (10) zur Zufuhr eines Strom eines druckbeaufschlagten hydraulischen Mediums zur Hauptleitung (12) der Vorrichtung, wobei solch ein Medium von einem Ölsumpf (11) angesaugt wird, ein Leitungsdruckventil (13) zum Steuern der Druckhöhe (Pline) in der Hauptleitung (12), wobei dieses Ventil (13) einen Überschuss an Pumpstrom in eine Hilfshydraulikleitung (14) der Vorrichtung abführt, ein Hilfsdruckventil (15) zum Steuern der Druckhöhe (Paux) in der Hilfsleitung (14) und eine einer axial beweglichen Platte der Riemenscheibe (5, 6) des stufenlosen Getriebes (1) zugeordnete Druckkammer (7, 8), **dadurch gekennzeichnet, dass** die Vorrichtung weiterhin mit Ventilmitteln (161, 181) zum gezielten Bereitstellen einer hydraulischen Verbindung zwischen der Druckkammer (7, 8) und dem Ölsumpf (11) oder zwischen der Druckkammer (7, 8) und der Hilfsleitung (14) versehen ist.

2. Stufenloses Getriebe (1) nach Anspruch 1, **dadurch gekennzeichnet, dass** die Ventilmittel (161, 181) in einem weiteren Ventil (161, 181) integriert sind, um die der Druckhöhe (Ppri, Psec) in der Druckkammer (7; 8) zu steuern.

3. Stufenloses Getriebe (1) nach Anspruch 2, **dadurch gekennzeichnet, dass** das weitere Ventil (161, 181) vier hydraulische Verbindungen umfasst, von denen eine mit der Hauptleitung (12), eine mit der Druckkammer (7, 8), eine mit der Hilfsleitung (14) und eine mit dem Ölsumpf (11) verbunden ist und wobei das weitere Ventil (161, 181) eine hydraulische Verbindung der Druckkammer (7, 8) entweder mit der Hauptleitung (12) oder mit der Hilfsleitung (14) oder mit dem Ölsumpf (11) gezielt öffnen kann.

4. Stufenloses Getriebe (1) nach Anspruch 2, **dadurch gekennzeichnet, dass** das weitere Ventil (161, 181) vier hydraulische Verbindungen umfasst, wobei eine mit der Hauptleitung (12), eine mit der Druckkammer (7, 8), eine mit der Hilfsleitung (14) und eine mit dem Ölsumpf (11) verbunden ist, wobei die Verbindung mit der Hilfsleitung (14) ein Rückschlagventil (187) enthält und wobei das weitere Ventil (161, 181) eine hydraulische Verbindung der Druckkammer (7, 8) entweder mit der Hauptleitung (12), mit der Hilfsleitung (14) oder sowohl mit der Hilfsleitung (14) als auch mit dem Ölsumpf (11) gezielt öffnen kann.

5. Stufenloses Getriebe (1) nach Anspruch 4, **dadurch gekennzeichnet, dass** das weitere Ventil (161, 181) ein Gehäuse (182), in dem die hydraulischen Verbindungen vorgesehen sind, und einen Ventilkörper (183), der axial in dem Ventilkörper (183) beweglich ist, umfasst, wobei der Ventilkörper (183) mit einer ersten und einer zweiten Aussparung (184, 188) versehen ist und wobei das Gehäuse (182) mit einer zum Ventilkörper (183) weisenden inneren Aussparung (189) neben der hydraulischen Verbindung mit der Hilfsleitung (14) versehen ist.

6. Stufenloses Getriebe (1) nach einem der Ansprüche 2 bis 5, **dadurch gekennzeichnet, dass** das weitere Ventil (161, 181) einen Ventilkörper (183), der in einem jeweiligen Gehäuse (182) axial beweglich ist, und eine innere Leitung (190), die gestattet, dass auf die Druckhöhe (Ppri, Psec) der jeweiligen dem weiteren Ventil (161, 181) zugeordneten Druckkammer (7, 8) druckbeaufschlagtes Hydraulikfluid auf den Ventilkörper (183) wirkt, umfasst.

7. Stufenloses Getriebe (1) nach Anspruch 6, **dadurch gekennzeichnet, dass** das weitere Ventil (161, 181) mit einer weiteren inneren Leitung (191) versehen ist, die gestattet, dass auf die der Druckhöhe (Ppri, Psec) der jeweiligen anderen, dem weiteren Ventil (161, 181) nicht zugeordneten Druckkammer (7, 8) druckbeaufschlagtes Hydraulikfluid auf den Ventilkörper (183) wirkt.

8. Stufenloses Getriebe (1) nach einem der vorhergehenden Ansprüche, **dadurch gekennzeichnet, dass** die jeweilige Druckkammer (7, 8) einer axial beweglichen Platte einer Primärriemenscheibe (2) des Getriebes (1) zugeordnet ist, die durch den Motor (E) eines Automobils angetrieben werden soll.

9. Stufenloses Getriebe (1) nach einem der vorhergehenden Ansprüche, **dadurch gekennzeichnet, dass** der Hilfsdruck (Paux) variabel ist.

10. Stufenloses Getriebe (1) nach Anspruch 9, **dadurch gekennzeichnet, dass** das Hilfsdruckventil (15) mit Ventilvorspannmitteln (15a, 15b, 15c) versehen ist, die eine Steuerleitung (15c) enthalten, welche auf eine woanders in der Steuervorrichtung vorherrschende Druckhöhe druckbeaufschlagtes Fluid befördert.

## Revendications

1. Transmission (1) à variation continue comportant un dispositif de commande comprenant : - une pompe (10) pour fournir un débit de fluide hydraulique sous pression à un conduit principal (12) du dispositif, ledit fluide étant puisé dans un carter d'huile (11) ; - une vanne (13) de pression de conduit pour commander le niveau de la pression (Pline) dans le conduit principal (12), laquelle dernière vanne (13) déverse l'excédent de débit de la pompe dans un conduit hydraulique auxiliaire (14) du dispositif ; - une vanne (15) de pression auxiliaire pour commander le niveau de la pression (Paux) dans le conduit auxiliaire (14) et - une chambre de pression (7, 8) qui est associée à un disque mobile axialement d'une poulie (5, 6) de la transmission (1) à variation continue, **caractérisée en ce que** le dispositif est en outre équipé de moyens de vanne (161, 181) pour assurer de manière sélective une liaison hydraulique entre la chambre de pression (7, 8) et le carter d'huile (11) ou entre la chambre de pression (7, 8) et le conduit auxiliaire (14).

2. Transmission (1) à variation continue selon la revendication 1, **caractérisée en ce que** les moyens de vanne (161, 181) sont intégrés dans une vanne supplémentaire (161, 181) pour commander le niveau de la pression (Ppri, Psec) dans la chambre de pression (7, 8).

3. Transmission (1) à variation continue selon la revendication 2, **caractérisée en ce que** la vanne supplémentaire (161, 181) comprend quatre liaisons hydrauliques, dont une est reliée au conduit principal (12), une autre à la chambre de pression (7, 8), une autre au conduit auxiliaire (14) et la dernière au carter d'huile (11), moyennant quoi la vanne supplémentaire (161, 181) est capable d'ouvrir de manière sélective une liaison hydraulique de la chambre de pression (7, 8) soit vers le conduit principal (12), soit vers le conduit auxiliaire (14), soit vers le carter d'huile (11).

4. Transmission (1) à variation continue selon la revendication 2, **caractérisée en ce que** la vanne supplémentaire (161, 181) comprend quatre liaisons hydrauliques, dont une est reliée au conduit principal (12), une autre à la chambre de pression (7, 8), une autre au conduit auxiliaire (14) et la dernière au carter d'huile (11), moyennant quoi la liaison vers le conduit auxiliaire (14) incorpore une soupape anti-retour (187) et moyennant quoi la vanne supplémentaire (161, 181) est capable d'ouvrir de manière sélective une liaison hydraulique de la chambre de pression (7, 8) soit vers le conduit principal (12), soit vers le conduit auxiliaire (14), soit vers à la fois le conduit auxiliaire (14) et le carter d'huile (11).

5. Transmission (1) à variation continue selon la revendication 4, **caractérisée en ce que** la vanne supplémentaire (161, 181) comprend un boîtier (182), dans lequel sont pratiquées lesdites liaisons hydrauliques, et un corps (183) de vanne conçu pour être mobile axialement à l'intérieur du boîtier (182), ledit corps (183) de vanne étant pourvu d'un premier et d'un second évidements (184, 188) et ledit boîtier (182) étant pourvu d'un évidement interne (189) adjacent à la liaison hydraulique vers le conduit auxiliaire (14) et en face du corps (183) de vanne.

6. Transmission (1) à variation continue selon l'une quelconque des revendications 2 à 5, **caractérisée en ce que** la vanne supplémentaire (161, 181) comprend un corps (183) de vanne conçu pour être mobile axialement à l'intérieur du boîtier (182) correspondant et un conduit interne (190) permettant à du fluide hydraulique sous pression au niveau de pression (Ppri, Psec) de la chambre de pression (7, 8) correspondante, associé à la vanne supplémentaire (161, 181), d'agir sur ledit corps (183) de vanne.

7. Transmission (1) à variation continue selon la revendication 6, **caractérisée en ce que** la vanne supplémentaire (161, 181) est dotée d'un conduit interne supplémentaire (191) permettant à du fluide hydraulique sous pression au niveau de pression (Ppri, Psec) de l'autre chambre de pression (7, 8) correspondante, non associé à l'autre vanne supplémentaire (161, 181), d'agir sur ledit corps (183) de vanne.

8. Transmission (1) à variation continue selon l'une quelconque des revendications précédentes, **caractérisée en ce que** la chambre de pression (7, 8) correspondante est associée à un disque mobile axialement d'une poulie primaire (2) de la transmission (1) qui doit être entraînée par le moteur (E) d'un véhicule à moteur.

9. Transmission (1) à variation continue selon l'une quelconque des revendications précédentes, **caractérisée en ce que** la pression auxiliaire (Paux) est variable.

10. Transmission (1) à variation continue selon la revendication 9, **caractérisée en ce que** la vanne (15) de pression auxiliaire comporte des moyens de rappels de vanne (15a, 15b, 15c) comprenant un conduit de commande (15c) transportant du fluide sous pression au niveau de pression rencontré ailleurs dans le dispositif de commande.
